# EUROPEAN PATENT SPECIFICATION

(11) **EP 4 028 452 B1**
(45) Date of publication and mention of the grant of the patent: **15.04.2026**
(21) Application number: 20776277.4
(22) Date of filing: 09.09.2020
(51) Int. Cl.: C08G 77/08, C08G 77/18, C08K 5/05, C08K 5/19, C08G 77/38

(54) **METHOD OF PREPARING ALKOXY-FUNCTIONAL ORGANOSILOXANE COMPOUNDS**
VERFAHREN ZUR HERSTELLUNG VON ALKOXY-FUNKTIONELLEN ORGANOSILICIUMVERBINDUNGEN
PROCÉDÉ DE PRÉPARATION DE COMPOSÉS D'ORGANOSILOXANE À FONCTIONNALITÉ ALCOXY

(30) Priority: 09.09.2019 US 201962897702 P
(43) Date of publication of application: 20.07.2022
(73) Proprietor: Dow Silicones Corporation, Midland, MI 48686-0994 (US)
(72) Inventor: COURTEMANCHE, Marc-André, Midland, Michigan 48686 (US); FERRITTO, Michael Salvatore, Midland, Michigan 48686 (US); SUTHIWANGCHAROEN, Nisaraporn, Midland, Michigan 48686 (US)
(74) Representative: Murgitroyd & Company
(86) International application number: PCT/US2020/049819
(87) International publication number: WO 2021/050465

(56) References cited:
- WO-A1-2016/077513
- GB-A- 1 511 508
- US-A- 4 486 567

## Description

### FIELD OF THE INVENTION

The present disclosure generally relates to organosiloxane compounds and, more specifically, to a method of preparing alkoxy-functional organosiloxane compounds and alkoxy-functional organosiloxane compounds prepared thereby.

### DESCRIPTION OF THE RELATED ART

Silicones are polymeric materials used in numerous commercial applications, primarily due to significant advantages they possess over their carbon-based analogues. More precisely called polymerized siloxanes or polysiloxanes, silicones have an inorganic silicon-oxygen backbone chain (···-Si-O-Si-O-Si-O-···) with organic side groups attached to the silicon atoms. Organic side groups may be used to link two or more of these backbones together. By varying the -Si-O-chain lengths, side groups, and crosslinking, silicones can be synthesized with a wide variety of properties and compositions. They can vary in consistency from liquid to gel to rubber to hard plastic.

Siloxane-based materials are known in the art and are utilized in myriad end use applications and environments. For example, organopolysiloxanes are utilized in numerous industrial, home care, and personal care formulations. Increasingly, hybrid materials having both silicone and organic functionality are utilized in various formulations, as such hybrid materials may exhibit combined benefits traditionally associated with only silicone materials or organic materials.

Unfortunately, many methods of preparing hybrid materials require functional organosilicon compounds (e.g. organosiloxanes), which are often difficult and expensive to synthesize and/or utilize. In particular, traditional methods of preparing certain functional organosilicon compounds are often incompatible with many silicone materials and organic materials alike (e.g. via promoting silicone rearrangements, unselective reactions, degradation, hydrolysis and/or unwanted transformation of functional groups), resulting in decreased yields and purities, and limiting general applicability of such methods. These disadvantages are in part due to the particular catalysts employed in many conventional synthesis methods, such as strong acids and bases, which are known to generate cyclic siloxanes (e.g. via depolymerization of a siloxane backbone). While noble metal-based compounds have also been explored as alternative catalysts, these compounds are also limited in application and increase costs associated with the methods in which they are utilized.

### BRIEF SUMMARY OF THE INVENTION

A method of preparing an alkoxy-functional organosiloxane compound is provided. The method comprises reacting (A) an initial organosiloxane compound and (B) an alcohol component in the presence of (C) a catalyst and, optionally, (D) an organosilicon compound, thereby preparing the alkoxy-functional organosiloxane compound. The initial organosiloxane compound (A) comprises at least one silanol group. The alcohol component (B) comprises an organic alcohol. The catalyst (C) comprises an ammonium carboxylate compound. The organosilicon compound (D), when utilized, comprises at least one alkoxysilyl group.

A reaction product comprising an alkoxy-functional organosiloxane compound prepared in accordance with the method and a composition comprising the alkoxy-functional organosiloxane compound or the reaction product comprising the same are also described but not claimed.

### DETAILED DESCRIPTION OF THE INVENTION

A method of preparing alkoxy-functional organosiloxane compounds is disclosed. The alkoxy-functional organosiloxane compounds so prepared, though not claimed, may be utilized in diverse end use applications. For example, the alkoxy-functional organosiloxane compounds may be utilized as a starting component and/or precursor when preparing silicone-organic hybrid materials, e.g. via copolymerization, grafting. The alkoxy-functional organosiloxane compounds may also be utilized in a composition or formulation. GB1511508A describes a method of preparing alkoxy-functional organosiloxane compounds starting out from an initial organosiloxane compound having at least one silanol group and an alcohol component comprising an organic alcohol in the presence of a potassium hydroxide catalyst.

The method comprises reacting (A) an initial organosiloxane compound having at least one silanol group and (B) an alcohol component comprising an organic alcohol in the presence of (C) a catalyst comprising an ammonium carboxylate compound. In general, reacting the initial organosiloxane compound (A) and the alcohol component (B) comprises combining the initial organosiloxane compound (A) and the alcohol component (B) in the presence of the catalyst (C). Said differently, there is generally no proactive step required for the reaction beyond combining the initial organosiloxane compound (A) and the alcohol component (B) in the presence of the catalyst (C). As will be appreciated by those of skill in the art, the reaction of the initial organosiloxane compound (A) and the alcohol component (B) may be generally defined or otherwise characterized as an alkoxylation reaction or, more simply, an "alkoxylation" (e.g. a selective alkoxylation reaction, a catalytic alkoxylation reaction, an alkoxyltic conversion reaction).

In general, the initial organosiloxane compound (A) is an organosilicon compound comprising an organosiloxane backbone having at least one silanol group, and is otherwise not particularly limited. In certain embodiments, the initial organosiloxane compound (A) has the general formula (I): 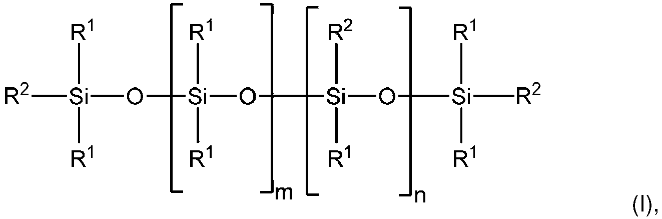 where each R¹ is an independently selected hydrocarbyl group; each R² is independently R¹ or -OH, with the proviso that at least one R² is -OH; subscript m is from 1 to 8000; and subscript n is from 0 to 20.

Each R¹ is an independently selected hydrocarbyl group. Suitable hydrocarbyl groups may be substituted or unsubstituted. With regard to such hydrocarbyl groups, the term "substituted" describes hydrocarbon moieties where either one or more hydrogen atoms is replaced with atoms other than hydrogen (e.g. a halogen atom, such as chlorine, fluorine, bromine), a carbon atom within a chain of the hydrocarbon is replaced with an atom other than carbon (i.e., R¹ may include one or more heteroatoms (oxygen, sulfur, nitrogen) within a carbon chain), or both. As such, it will be appreciated that R¹ may comprise, or be, a hydrocarbon moiety having one or more substituents in and/or on (i.e., appended to and/or integral with) a carbon chain/backbone thereof, such that R¹ may comprise, or be, an ether, an ester.

In general, hydrocarbyl groups suitable for R¹ may independently be linear, branched, cyclic, or combinations thereof. Cyclic hydrocarbyl groups encompass aryl groups as well as saturated or non-conjugated cyclic groups. Cyclic hydrocarbyl groups may independently be monocyclic or polycyclic. Linear and branched hydrocarbyl groups may independently be saturated or unsaturated. One example of a combination of a linear and cyclic hydrocarbyl group is an aralkyl group. General examples of hydrocarbyl groups include alkyl groups, aryl groups, alkenyl groups, halocarbon groups, and the like, as well as derivatives, modifications, and combinations thereof. Examples of suitable alkyl groups include methyl, ethyl, propyl (e.g. isopropyl and/or n-propyl), butyl (e.g. isobutyl, n-butyl, tert-butyl, and/or sec-butyl), pentyl (e.g. isopentyl, neopentyl, and/or tert-pentyl), hexyl, as well as branched saturated hydrocarbon groups having from 6 to 18 carbon atoms. Examples of suitable aryl groups include phenyl, tolyl, xylyl, naphthyl, benzyl, and dimethyl phenyl. Examples of suitable alkenyl groups include vinyl, allyl, propenyl, isopropenyl, butenyl, isobutenyl, pentenyl, heptenyl, hexenyl, and cyclohexenyl groups. Examples of suitable monovalent halogenated hydrocarbon groups (i.e., halocarbon groups) include halogenated alkyl groups, aryl groups, and combinations thereof. Examples of halogenated alkyl groups include the alkyl groups described above where one or more hydrogen atoms is replaced with a halogen atom such as F or Cl. Specific examples of halogenated alkyl groups include fluoromethyl, 2-fluoropropyl, 3,3,3-trifluoropropyl, 4,4,4-trifluorobutyl, 4,4,4,3,3-pentafluorobutyl, 5,5,5,4,4,3,3-heptafluoropentyl, 6,6,6,5,5,4,4,3,3-nonafluorohexyl, and 8,8,8,7,7-pentafluorooctyl, 2,2-difluorocyclopropyl, 2,3-difluorocyclobutyl, 3,4-difluorocyclohexyl, and 3,4-difluoro-5-methylcycloheptyl, chloromethyl, chloropropyl, 2-dichlorocyclopropyl, and 2,3-dichlorocyclopentyl groups, as well as derivatives thereof. Examples of halogenated aryl groups include the aryl groups described above where one or more hydrogen atoms is replaced with a halogen atom, such as F or Cl. Specific examples of halogenated aryl groups include chlorobenzyl and fluorobenzyl groups. Typically, each R¹ is an independently selected substituted or unsubstituted hydrocarbyl group.

Each R¹ may be the same as or different from any other R¹ in the initial organosiloxane compound (A). In certain embodiments, each R¹ is the same. In other embodiments, at least one R¹ is different from at least one other R¹ of the initial organosiloxane compound (A). In some embodiments, each R¹ is an independently selected hydrocarbyl group having from 1 to 18, alternatively from 1 to 12, alternatively from 1 to 6, alternatively from 1 to 4 carbon atoms. Typically, each R¹ is independently selected from alkyl groups, such as methyl groups, ethyl groups. In certain embodiments, each R¹ is methyl.

Each R² is independently R¹ or -OH, with the proviso that at least one R² is -OH. As such, the initial organosiloxane compound (A) comprises at least one silanol group (i.e., is silanol-functional). In some embodiments, the initial organosiloxane compound (A) comprises but one silanol group. In other embodiments, the initial organosiloxane compound (A) comprises at least two, alternatively at least three, of the silanol groups. As will be understood by those of skill in the art, each R² is independently selected in each moiety indicated by subscript n, such that the initial organosiloxane compound (A) may comprise a total of from 1 to n+2 number of the silanol groups.

As will be appreciated by those of skill in the art, subscripts m and n represent the number of siloxy units in, and thus the degree of polymerization (DP) of, the initial organosiloxane compound (A). It will be appreciated that the siloxy units indicated by subscripts m and n may be in any order (e.g. randomized and/or block form) in the initial organosiloxane compound (A). In general, the initial organosiloxane compound (A) has a DP of from 5 to 8000. In particular embodiments, the initial organosiloxane compound (A) has a DP greater than 1000, alternatively greater than 2000, alternatively greater than 3000, alternatively greater than 4000, alternatively greater than 5000. In some embodiments, the initial organosiloxane compound (A) has a DP less than 1000, alternatively less than 750, alternatively less than 500, alternatively less than 250, alternatively less than 100, alternatively less than 50.

Subscript m is from (and including) 1 to 8000, alternatively from 4 to 8000. In some embodiments, subscript m is from 500 to 8000, alternatively from 1000 to 8000, alternatively from 2000 to 8000, alternatively from 3000 to 8000, alternatively from 4000 to 8000, alternatively from 5000 to 8000. In certain embodiments, subscript m is from 1 to 1000, alternatively from 4 to 1000, alternatively from 1 to 800, alternatively from 4 to 800, alternatively from 1 to 600, alternatively from 4 to 600, alternatively from 1 to 400, alternatively from 4 to 400, alternatively from 1 to 200, alternatively from 4 to 200, alternatively from 1 to 100, alternatively 4 to 100.

Subscript n is from (and including) 0 to 20. In some embodiments, subscript n is from 1 to 20, alternatively from 1 to 18, alternatively from 1 to 17, alternatively from 1 to 16, alternatively from 1 to 15, alternatively from 1 to 14, alternatively from 1 to 13, alternatively from 1 to 12, alternatively from 1 to 11, alternatively from 1 to 10.

In particular embodiments, subscript n is 0, and the initial organosiloxane compound (A) has the following formula: 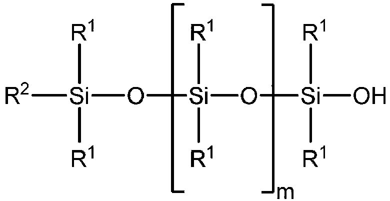 where R¹,R², and subscript m are each as defined above. In some such embodiments, R² is R¹, such that the initial organosiloxane compound (A) is mono-silanol functional. In other such embodiments, R² is -OH, such that the initial organosiloxane compound (A) is disilanol functional.

In certain embodiments, the method comprises utilizing more than one initial organosiloxane compound (A), such as 2, 3, 4, or more initial organosiloxane compounds (A). In such embodiments, each initial organosiloxane compound (A) is independently selected, and may be the same as or different from any other initial organosiloxane compound (A).

The initial organosiloxane compound (A) may be utilized in any form, such as neat (i.e., absent solvents, carrier vehicles, diluents), or disposed in a carrier vehicle, such as a solvent or dispersant. The carrier vehicle, if present, may comprise an organic solvent (e.g. aromatic hydrocarbons such as benzene, toluene, xylene; aliphatic hydrocarbons such as heptane, hexane, octane; halogenated hydrocarbons such as dichloromethane, 1,1,1-trichloroethane, chloroform; ethers such as diethyl ether, tetrahydrofuran), a silicone fluid, or combinations thereof. When utilized, the carrier vehicle will be selected based on the particular components of the reaction, such as the particular initial organosiloxane compound (A) selected. For example, in certain embodiments, the method is carried out in the presence of a carrier vehicle or solvent comprising a polar component, such as an ether, acetonitrile, dimethylformamide, dimethylsulfoxide, or combinations thereof. In some embodiments, the carrier vehicle may comprise a halogenated hydrocarbon, such as those described above. In such embodiments, the carrier vehicle in general, and/or the halogenated hydrocarbon in particular, is typically purified and/or processes to reduce, alternatively to remove, any hydrochloric acid (HCl) therefrom. It will be appreciated that the initial organosiloxane compound (A) may be combined with the carrier vehicle, if utilized, prior to, during, or after being combined with any one or more other components of the reaction. In certain embodiments, the initial organosiloxane compound (A) may be utilized as a carrier vehicle for the reaction, e.g. when the initial organosiloxane compound (A) is liquid under the reaction conditions employed.

In certain embodiments, the initial organosiloxane compound (A) is free from, alternatively substantially free from carrier vehicles. In some such embodiments, the initial organosiloxane compound (A) is free from, alternatively substantially free from, water and carrier vehicles/volatiles reactive with the initial organosiloxane compound (A) and/or any one or more other components of the reaction. In some embodiments, the method is carried out in the absence of carrier vehicles/volatiles that are reactive with the initial organosiloxane compound (A) and/or any one or more other components of the reaction. For example, in certain embodiments, the method may comprise stripping a mixture of the initial organosiloxane compound (A) of volatiles and/or solvents prior to combining the same with any one or more other components of the reaction. Techniques for stripping the initial organosiloxane compound (A) are known in the art, and may include heating, drying, applying reduced pressure/vacuum, azeotroping with solvents, utilizing molecular sieves, etc., and combinations thereof.

The initial organosiloxane compound (A) may be utilized in any amount, which will be selected by one of skill in the art, e.g. dependent upon the particular components selected for reacting, the reaction parameters employed, the scale of the reaction (e.g. total amounts of component (A) to be reacted and/or alkoxy-functional organosiloxane compound to be prepared).

The alcohol component (B) comprises an organic alcohol, and is otherwise not particularly limited. As will be appreciated by one of skill in the art, the organic alcohol is also not particularly limited, but will be selected in view of the particular compounds/components utilized in the method, including the boiling point and/or other properties of byproducts produced during the reaction of components (A) and (B).

Typically, the organic alcohol of the alcohol component (B) has the formula R³OH, where R³ is an independently selected hydrocarbyl group. Examples of hydrocarbyl groups suitable for R³ include any of those described above. For example, in certain embodiments, R³ is selected from substituted and unsubstituted hydrocarbyl groups. In some such embodiments, R³ is a substituted or unsubstituted hydrocarbyl group having at least 3, alternatively at least 4, alternatively at least 5, alternatively at least 6, alternatively greater than 6 carbon atoms. In particular embodiments, R³ is an independently selected hydrocarbyl group having from 3 to 30, alternatively from 3 to 28, alternatively from 3 to 26, alternatively from 3 to 24, alternatively from 3 to 22, alternatively from 4 to 22, alternatively from 5 to 22, alternatively from 6 to 22, alternatively from 6 to 20 carbon atoms.

Examples of suitable organic alcohols include 2,2-dimethyl-3-(3-methylphenyl)-1-propanol, 2,2-dimethyl-3-phenyl-1-propanol, 3-(2-bornyloxy)2-methyl-1-propanol, 2-tert-butylcyclohexanol, 4-tert-butylcyclohexanol, dihydroterpineol, 2,4-dimethyl-4-cyclohexen-1-yl methanol, 2,4-dimethylcyclohexyl methanol, 2,6-dimethyl-2-heptanol, 2,6-dimethyl-4-heptanol, 2,6-dimethyl-2,7-octadien-6-ol (linalool), cis-3,7-dimethyl-2,6-octadien-1-ol (nerol), trans-3,7-dimethyl-2,6-octadien-1-ol (geraniol), 1-octanol, 2-octanol, 3,7-dimethyl-1,7-octanediol, 3,7-dimethyl-1-octanol (tetrahydrogeraniol), 2,6-dimethyl-2-octanol (tetrahydromyrcenol), 3,7-dimethyl-3-octanol (tetrahydrolinalool), 2,6-dimethyl-7-octen-2-ol (dihydromyrcenol), 3,7-dimethyl-6-octen-1-ol (citronellol), 3,7-dimethyl-1,6-nonadien-3-ol,1-decanol, 9-decen-1-ol, 2-ethyl-4-(2,2,3-trimethyl-3-cyclopenten-1-yl)-2-buten-1-ol, cis-3-hexen-1-ol, 4-(4-hydroxy-3-methoxyphenyl)-2-butanone, 3-(hydroxymethyl)-2-nonanone, 3a,4,5,6,7,7a-hexahydro-2,4-dimethyl-4,7-methano[H]inden-5-ol, 1-hydroxy-2-(1-methyl-1-hydroxyethyl)-5-methylcyclohexane, 4-hydroxy-3-methoxybenzaldehyde (vanillin), 3-ethoxy-4-hydroxybenzaldehyde (ethylvanillin), 4-(4-hydroxy-4-methylpentyl)-3-cyclohexene-1-carboxaldehyde, isoborneol, 3-isocamphylcyclohexanol, 2-isopropenyl-5-methylcyclohexanol (isopulegol), 1-isopropyl-4-methylcyclohex-3-enol (terpinenol), 4-isopropylcyclohexanol, 1-(4-isopropylcyclohexyl) ethanol, 4-isopropylcyclohexylmethanol, 2-isopropyl-5-methylcyclohexanol (menthol), 2-isopropyl-5-methylphenol (thymol), 5-isopropyl-2-methylphenol (carvacrol), 2-(4-methyl-3-cyclohexenyl)-2-propanol (terpineol), 2-(4-methylcyclohexyl)-2-propanol (dihydroterpineol), benzyl alcohol, 4-methoxybenzyl alcohol, 2-methoxy-4-methylphenol, 3-methoxy-5-methylphenol, 2-ethoxy-4-methoxymethylphenol, 4-allyl-2-methoxyphenol (eugenol), 2-methoxy-4-propenylphenol (isoeugenol), 1-methoxy-4-propenylbenzene (anethol), 4-methyl-3-decen-5-ol, 2-methyl-6-methylene-7-octen-2-ol (myrcenol), 2-methyl-2-butanol (2M2B, tert-amyl alcohol, TAA), 3-methyl-4-phenyl-2-butanol,3-methyl-1-butanol (isoamyl alcohol, isopentyl alcohol) 2-(2-methylphenyl) ethanol, 2-methyl-4-phenyl-1-pentanol, 3-methyl-5-phenyl-1-pentanol, 2-methyl-1-phenyl-2-propanol, (1-methyl-2-(1,2,2-trimethylbicyclo[3.1.0]hex-3-ylmethyl) cyclopropyl) methanol, 3-methyl-4-(2,2,6-trimethylcyclohexen-1-yl)-2-butanol, 2-methyl-4-(2,2,3-trimethyl-3-cyclopenten-1-yl)-2-buten-1-ol, (3-methyl-1-(2,2,3-trimethyl-3-cyclopentenyl)-3-cyclohexen-1-yl) methanol, 3-methyl-5-(2,2,3-trimethyl-3-cyclopenten-1-yl)-4-penten-2-ol, 2-methyl-2-vinyl-5-(1-hydroxy-1-methylethyl) tetrahydrofuran, (2E,6Z)-nona-2,6-dien-1-ol, 1-nonanol, 3,5,5-trimethyl-1-hexanol (isononanol),nopol, 1,2,3,4,4a,5,6,7-octahydro-2,5,5-trimethyl-2-naphthol, 3,4,5,6,6-pentamethyl-2-heptanol, 2-phenylethanol, 2-phenylpropanol, 3-phenylpropanol (hydrocinnamic alcohol), 3-phenyl-2-propen-1-ol (cinnamic alcohol), 4-(5,5,6-trimethylbicyclo[2.2.1]hept-2-yl) cyclohexan-1-ol, 3,5,5-trimethylcyclohexanol, 2,4,6-trimethyl-4-cyclohexen-1-ylmethanol, 5-(2,2,3-trimethyl-3-cyclopentenyl)-3-methylpentan-2-ol, 3,7,11-trimethyl-2,6,10-dodecatrien-1-ol (farnesol), 3,7,11-trimethyl-1,6,10-dodecatrien-3-ol (nerolidol), 1-undecanol, 10-undecen-1-ol, vetiverol, and the like, as well as derivatives, modifications, and combinations thereof. In particular embodiments, the organic alcohol is selected from geraniol, 2E,6Z)-nona-2,6-dien-1-ol, isoamyl alcohol, benzyl alcohol, 2-octanol, and 2-methyl-2-butanol.

In certain embodiments, the organic alcohol of the alcohol component (B) may comprise, alternatively may be, a fragrance alcohol or a nonfragrance alcohol. Typically, the distinction as to whether a particular organic alcohol is considered a fragrance alcohol or a nonfragrance alcohol is based on whether the particular organic alcohol exhibits an odiferous effect detectable by a human nose. However, because the organic alcohol can be considered either a fragrance alcohol and/or a nonfragrance alcohol, such distinction is only relevant, if at all, to the selection of the organic alcohol of the alcohol component (B) by one of skill in the art based on end use applications. In some embodiments, the alcohol component (B) is substantially free from, alternatively free from, a fragrance alcohol. In these or other embodiments, the organic alcohol of the alcohol component (B) is substantially free from, alternatively free from pro-fragrance and/or fragrance precursor groups.

In certain embodiments, the alcohol component (B) comprises more than one organic alcohol, such as 2, 3, 4, or more organic alcohols. In such embodiments, each organic alcohol is independently selected, and may be the same as or different from any other organic alcohol, e.g. in terms of number of carbon atoms, structure (e.g. stereochemistry), boiling point, vaporization point, vapor pressure.

The organic alcohol of the alcohol component (B) may be utilized in any form, such as neat (i.e., absent solvents, carrier vehicles, diluents), or disposed in a carrier vehicle, such as a solvent or dispersant. As such, the alcohol component (B) itself may comprise the organic alcohol and other components, such as the carrier vehicle, or may consist essentially of, alternatively consist of, the organic alcohol. The carrier vehicle, if present, may comprise an organic solvent (e.g. aromatic hydrocarbons such as benzene, toluene, xylene; aliphatic hydrocarbons such as heptane, hexane, octane; halogenated hydrocarbons such as dichloromethane, 1,1,1-trichloroethane, chloroform; ethers such as diethyl ether, tetrahydrofuran), a silicone fluid, or combinations thereof. It will be appreciated that the alcohol component (B) may be combined with such a carrier vehicle, if utilized, prior to, during, or after being combined with component (A) and/or any one or more other components of the reaction. In certain embodiments, the alcohol component (B) itself is utilized as a carrier vehicle for the reaction, e.g. when the organic alcohol is liquid under the reaction conditions employed.

In certain embodiments, the alcohol component (B) is free from, alternatively substantially free from carrier vehicles. In some such embodiments, the alcohol component (B) is free from, alternatively substantially free from, water and carrier vehicles/volatiles reactive with the alcohol component (B) (e.g. the organic alcohol thereof), the initial organosiloxane compound (A), and/or any one or more other components of the reaction. For example, in certain embodiments, the method may comprise stripping the alcohol component (B) of volatiles (i.e., aside from the organic alcohol, if volatile) and/or solvents (e.g. water, reactive solvents) prior to combining the same with and/or any one or more other components of the reaction (e.g. component (A)). Techniques for stripping the alcohol component (B) are known in the art, and may include heating, drying, applying reduced pressure/vacuum, azeotroping with solvents, utilizing molecular sieves, and combinations thereof.

The alcohol component (B) may be utilized in any amount, which will be selected by one of skill in the art, e.g. dependent upon the particular initial organosiloxane compound (A) selected, the reaction parameters employed, the scale of the reaction (e.g. total amounts of component (A) to be converted and/or alkoxy-functional organosiloxane compound to be prepared).

The catalyst (C) comprises an ammonium carboxylate compound. The ammonium carboxylate compound is not particularly limited, and generally comprises the reaction product of an amine compound and a carboxylic acid. One of skill in the art will appreciate that the reaction of the amine compound and the carboxylic acid is generally an acid-base reaction, where the amine compound (i.e., a base) is protonated by the carboxylic acid to give an ammonium cation and a carboxylate anion, which are collectively referred to as the ammonium carboxylate compound, regardless of whether such ions are closely or transiently coordinated.

In general, suitable amine compounds for use in preparing the ammonium carboxylate compound of the catalyst (C) include amino-functional organic compounds (e.g. amine-substituted hydrocarbon compounds). In particular, the amine compound typically comprises a moiety having the general formula: 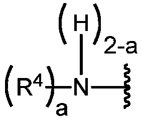 where each R⁴ is an independently selected substituted or unsubstituted hydrocarbyl group having from 1 to 18 carbon atoms, and subscript a is 0, 1, or 2. Examples of hydrocarbyl groups suitable for R⁴ include any of those described above. For example, in certain embodiments, each R⁴ is a substituted or unsubstituted hydrocarbyl group having from 1 to 16, alternatively from 1 to 14, alternatively from 1 to 12, alternatively from 1 to 10, alternatively from 1 to 9, alternatively from 1 to 8, alternatively from 1 to 7 carbon atoms. In some such embodiments, each R⁴ is a linear, branched, and/or cyclic alkyl group. In some embodiments, subscript a is 0, such that the amine compound is a primary amine. In other embodiments, subscript a is 1, such that the amine compound is a secondary amine. In additional embodiments, subscript a is 2, such that the amine compound is a tertiary amine.

In some embodiments, the amine compound is an organic amine having the general formula: 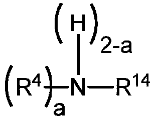 where each R⁴ and subscript a are as defined above and R¹⁴ is an independently selected substituted or unsubstituted hydrocarbyl group having from 1 to 22 carbon atoms. Examples of hydrocarbyl groups suitable for R¹⁴ include any of those described above, such that R¹⁴ may be the same as or different from any R⁴, if present, of the amine compound. For example, in certain embodiments, R¹⁴ is a substituted or unsubstituted hydrocarbyl group having from 1 to 20, alternatively from 2 to 20, alternatively from 2 to 18 carbon atoms. In particular embodiments, R¹⁴ is a linear, branched, and/or cyclic alkyl group.

In particular embodiments, the amine compound is an organic amine having the general formula above where subscript a is 0 or 1, such that the amine compound may be defined as a primary or secondary organic amine, respectively. In some such embodiments, subscript a, each R⁴, and R¹⁴ are selected such that the amine compound comprises a total of from 3 to 20, alternatively from 4 to 20, alternatively from 5 to 20, alternatively from 5 to 18 carbon atoms. It is to be appreciated that the amine compound may be a cyclic amine, such as a secondary or tertiary amine with at least two nitrogen-bonded substituents being joined to one another in a ring structure (i.e., the amine compound may be a heterocyclic amine, such as a pyrrole, pyrrolidine, imidazole, thiazole, pyridine, piperidine, morpholine).

Typically, the amine compound is selected from volatile organic amines. For example, in certain embodiments the organic amine has a vaporization point of less than 300, alternatively less than 250, alternatively less than 240, alternatively less than 230, alternatively less than 220, alternatively less than 210, alternatively less than 200 °C, at atmospheric pressure. It is to be understood that the term vaporization point, as used herein, refers to a temperature at which a compound in a solid or liquid phase is converted to a vapor/gaseous phase (e.g. via evaporation, sublimation). In this sense, the vaporization point may correspond to a boiling point of such a compound (e.g. where the compound is a liquid). In particular embodiments, the amine compound has a vaporization point of from 50 to 250, alternatively from 60 to 250, alternatively from 60 to 235, alternatively from 70 to 235, alternatively from 70 to 220 °C, at atmospheric pressure.

Examples of particular amine compounds suitable for use in preparing the ammonium carboxylate compound include: alkylamines, such as aliphatic primary alkylamines including methylamine, ethylamine, propyl amines (e.g. n-propylamine, isopropylamine), butyl amines (e.g. n-butylamine, sec-butylamine, isobutylamine, t-butylamine), pentyl amines (e.g. pentylamine, 2-aminopentane, 3-aminopentane, 1-amino-2-methylbutane, 2-amino-2-methylbutane, 3-amino-2-methylbutane, 4-amino-2-methylbutane), hexylamines (e.g. hexylamine, 5-amino-2-methylpentane), heptylamines, octylamines, nonylamines, decylamines, undecylamines, dodecylamines, tridecylamines, tetradecylamines, pentadecylamines, hexadecylamines, heptadecylamines, octadecylamines, and the like; aliphatic secondary alkylamines, such as dimethylamine, diethylamine, dipropylamine, diisopropylamine, dibutylamine, diisobutylamine, di-sec-butylamine, di-tert-butylamine, dipentylamine, dihexylamine, diheptylamine, dioctylamine, dinonylamine, didecylamine, methylethylamine, methypropylamine, methylisopropylamine, methylbutylamine, methylisobutylamine, methyl-sec-butylamine, methyl-tert-butylamine, methylamylamine, methylisoamylamine, ethylpropylamine, ethylisopropylamine, ethylbutylamine, ethylisobutylamine, ethyl-sec-butylamine, ethyl-tert-butylamine, ethylisoamylamine, propylbutylamine, propylisobutylamine, and the like; as well as derivatives, modifications, and combinations thereof. For example, mixed secondary alkylamines (e.g. N-ethylisopropylamine), such as any of those comprising a combination of the alkyl groups listed in the above examples, may also be utilized. In particular embodiments, the amine compound comprises, alternatively is, octadecylamine and/or diethylamine.

In certain embodiments, the ammonium carboxylate compound comprises (i.e., is formed from) more than one amine compound, such as 2, 3, 4, or more amine compounds. In such embodiments, each amine compound is independently selected, and may be the same as or different from any amine compound of the ammonium carboxylate compound. Likewise, the catalyst (C) may comprise more than one ammonium carboxylate compound, such as such as 2, 3, 4, or more ammonium carboxylate compounds. In such embodiments, the amine compound of each ammonium carboxylate compound is independently selected, and may independently complex, coordinate, ion pair, or otherwise associate with any carboxylic acid of the catalyst (C) (i.e., when the amine compound is protonated to a corresponding ammonium cation and the carboxylic acid is deprotonated to a corresponding carboxylate anion).

In general, suitable carboxylic acid compounds for use in preparing the ammonium carboxylate compound of the catalyst (C) have the general formula: 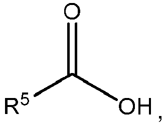 where R⁵ is an independently selected substituted or unsubstituted hydrocarbyl group having from 1 to 18 carbon atoms. Examples of hydrocarbyl groups suitable for R⁵ include any of those described above. For example, in certain embodiments, R⁵ is a substituted or unsubstituted hydrocarbyl group having from 1 to 16, alternatively from 1 to 14, alternatively from 1 to 12 carbon atoms. In particular embodiments, R⁵ is a linear, branched, and/or cyclic alkyl group. In some embodiments, R⁵ is propyl or methyl.

Typically, the carboxylic acid is selected from volatile carboxylic acids. For example, in certain embodiments the carboxylic acid having a vaporization point of less than 300, alternatively less than 255, alternatively less than 240, alternatively less than 230, alternatively less than 220, alternatively less than 220, alternatively less than 200, alternatively less than 190, alternatively less than 180 °C, at atmospheric pressure. In particular embodiments, the carboxylic acid has a vaporization point of from 100 to 250, alternatively from 100 to 225, alternatively from 100 to 200, alternatively from 100 to 175, alternatively from 100 to 150 °C, at atmospheric pressure.

Examples of particular carboxylic acids suitable for use in preparing the ammonium carboxylate compound include ethanoic acids (e.g. acetic acid), propanoic acids (e.g. propionic acid), butanoic acids (e.g. butyric acid), pentanoic acids (e.g. valeric acid), hexanoic acids (e.g. caproic acid), heptanoic acids (e.g. enanthic acid), octanoic acids (e.g. caprylic acid), nonanoic acids (e.g. pelargonic acid), decanoic acids (e.g. capric acid), and the like, as well as derivatives, modifications, and combinations thereof. In certain embodiments, the carboxylic acid is acetic acid and/or propionic acid, such that the ammonium carboxylate compound (C1) comprises acetate and/or propionate. While linear carboxylic acids are exemplified above, it will be appreciated that cyclic and/or branched carboxylic acids may also be utilized.

In certain embodiments, the ammonium carboxylate compound comprises (i.e., is formed from) more than one carboxylic acid, such as 2, 3, 4, or more carboxylic acids. In such embodiments, each carboxylic acid is independently selected, and may be the same as or different from any carboxylic acid of the ammonium carboxylate compound. Likewise, the catalyst (C) may comprise more than one ammonium carboxylate compound, such as such as 2, 3, 4, or more ammonium carboxylate compounds. In such embodiments, the carboxylic acid of each ammonium carboxylate compound is independently selected, and may independently complex, coordinate, ion pair, or otherwise associate with any amine compound of the catalyst (C) (i.e., when the amine compound is protonated to a corresponding ammonium cation and the carboxylic acid is deprotonated to a corresponding carboxylate anion).

The catalyst (C) may be prepared as part of the method, or otherwise obtained (i.e., as a prepared compound). Preparing the catalyst (C) may be performed prior to the reaction of components (A) and (B), or in situ (i.e., during the reaction of components (A) and (B), e.g. via combining components of the catalyst (C) with components (A) and/or (B)). For example, in some embodiments, the method comprises combining the amine compound and the carboxylic acid compound with the initial organosiloxane compound (A) and/or the alcohol component (B), thereby forming the ammonium carboxylate compound of the catalyst (C) in situ.

The catalyst (C) may be utilized in any form, such as neat (i.e., absent solvents, carrier vehicles, diluents), or disposed in a carrier vehicle, such as a solvent or dispersant (e.g. such as any of those listed above with respect to the initial organosiloxane compound (A) and/or the alcohol component (B)). Moreover, the components of the catalyst (C) (e.g. the amine compound and the carboxylic acid for forming the ammonium carboxylate compound) may be individually utilized neat or disposed in a carrier vehicle. In particular embodiments, the amine compound and/or the carboxylic acid may act as a carrier vehicle.

In some embodiments, the catalyst (C) is utilized in a form absent water and/or carrier vehicles/volatiles reactive with the initial organosiloxane compound (A), the alcohol component (B), and/or the catalyst (C) itself (i.e., until combined with components (A) and (B). For example, in certain embodiments, the method may comprise stripping the catalyst (C) of volatiles and/or solvents (e.g. water, organic solvents). Techniques for stripping the catalyst (C) are known in the art, and may include heating, drying, applying reduced pressure/vacuum, azeotroping with solvents, utilizing molecular sieves, and combinations thereof.

The catalyst (C) may be utilized in any amount, which will be selected by one of skill in the art, e.g. dependent upon the particular catalyst (C) selected (e.g. the concentration/amount of the ammonium carboxylate compound therein), the reaction parameters employed, the scale of the reaction (e.g. total amounts of components (A) and (B)), etc. The molar ratio of the catalyst (C) to components (A) and/or (B) utilized in the reaction may influence the rate and/or amount condensation to prepare the alkoxy-functional organosiloxane compound. Thus, the amount of the catalyst (C) as compared to components (A) and/or (B), as well as the molar ratios therebetween, may vary. Typically, these relative amounts and the molar ratio are selected to maximize the condensation of components (A) and (B) while minimizing the loading of the catalyst (C) (e.g. for increased economic efficiency of the reaction, increased ease of purification of the reaction product formed).

In certain embodiments, the catalyst (C) is utilized in the reaction to provide the ammonium carboxylate compound in an amount of from 0.001 to 50 mol % based on the total amount of component (A) utilized. For example, the catalyst (C) may be used to provide the ammonium carboxylate compound in an amount of from 0.005 to 40, alternatively of from 0.005 to 30, alternatively of from 0.005 to 20, alternatively of from 0.01 to 20, mol % based on the total amount of component (A) utilized. Likewise, the catalyst (C) may be used to provide the ammonium carboxylate compound in an amount of from 0.005 to 40, alternatively of from 0.005 to 30, alternatively of from 0.005 to 20, alternatively of from 0.01 to 20, mol % based on the total amount of the organic alcohol of component (B) utilized. It will be appreciated that ratios outside of these ranges may be utilized as well.

In certain embodiments, the initial organosiloxane compound (A) and the alcohol component (B) are reacted in the presence of (D) an organosilicon compound having at least one alkoxysilyl group. More specifically, in these embodiments, the method comprises reacting the initial organosiloxane compound (A), the alcohol component (B), and the organosilicon compound (D) in the presence of the catalyst (C), thereby preparing the alkoxy-functional organosiloxane compound. In general, reacting the initial organosiloxane compound (A), the alcohol component (B), and the organosilicon compound (D) in the presence of the catalyst (C) comprises combining components (A), (B), and (D) in the presence of the catalyst (C). Said differently, there is generally no proactive step required for the reaction beyond combining components (A), (B), and (D) in the presence of the catalyst (C). As will be appreciated by those of skill in the art in view of the description herein, when the organosilicon compound (D) is utilized, the portions of the reaction involving the alkoxysilyl group of the organosilicon compound (D) and the silanol group of the initial organosiloxane compound (A) may be generally defined or otherwise characterized as a condensation reaction or, more simply, a "condensation." Additionally, the portions of the reaction involving the alkoxysilyl group of the organosilicon compound (D) and the organic alcohol of the alcohol component (B) may be generally defined or otherwise characterized as a transalkoxylation reaction or alkoxylation reaction or, more simply, a "transalkoxylation" or "alkoxylation" (e.g. a selective alkoxylation/transalkoxylation, a catalytic alkoxylation/transalkoxylation, an alkoxyltic conversion reaction).

The organosilicon compound (D) is an organosilicon compound having at least one alkoxysilyl group, and is otherwise not particularly limited. In general, the organosilicon compound (D) has the general formula: 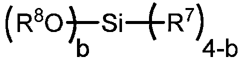 where each R⁷ and R⁸ is an independently selected hydrocarbyl group and subscript b is 1, 2, or 3.

Examples of hydrocarbyl groups suitable for R⁷ include any of those described above. For example, each R⁷ is typically independently selected from substituted and unsubstituted hydrocarbyl groups. Each R⁷ may be the same as or different from any other R⁷ in the organosilicon compound (D). In certain embodiments, each R⁷ is the same. In other embodiments, at least one R⁷ is different from at least one other R⁷ of the organosilicon compound (D). In some embodiments, each R⁷ is an independently selected hydrocarbyl group having from 1 to 6 carbon atoms. Typically, each R⁷ is independently selected from alkyl groups, such as methyl groups, ethyl groups. For example, in certain embodiments, each R⁷ is methyl. However, suitable groups for R⁷ need not by alkyl groups. For example, in some embodiments, at least one, alternatively each, R⁷ is phenyl.

Examples of hydrocarbyl groups suitable for R⁸ include any of those described above. For example, each R⁸ is typically independently selected from substituted and unsubstituted hydrocarbyl groups. As such, each R⁸ may be the same as or different from any R⁷ and/or other R⁸ in the organosilicon compound (D). In certain embodiments, each R⁸ is the same as each other. In some embodiments, at least one R⁸ is different from at least one R⁷ of the organosilicon compound (D). In particular embodiments, each R⁷ and R⁸ is the same as each other.

Typically, each R⁸ is an independently selected substituted or unsubstituted hydrocarbyl group having from 1 to 18, alternatively from 1 to 12, alternatively from 1 to 6, alternatively from 1 to 4 carbon atoms. Typically, each R⁸ is independently selected from alkyl groups, such as methyl groups, ethyl groups. In certain embodiments, each R⁸ is methyl.

In general, as will be appreciated by those of skill in the art, R⁸ is typically selected to be different from R³ of the organic alcohol of the alcohol component (B) to facilitate the transalkoxylation reaction. The difference between R⁸ and R³ may be independently selected, e.g. to increase the ease of purifying the alkoxy-functional organosiloxane compound to be prepared (i.e., with regard to removal of alcohol of formula R⁸OH produced during the reaction, via distillation, evaporation), as described below. For example, in certain embodiments, R⁸ is selected to have at least 1, alternatively at least 2, alternatively at least 3, alternatively at least 4 fewer carbon atoms than R³ of the organic alcohol of the alcohol component (B). In these or other embodiments, R⁸ and R³ are cooperatively selected such that the organic alcohol of the alcohol component (B) has a higher boiling point and/or lower vapor pressure than the alcohol of formula R⁸OH produced from the organosilicon compound (D) during the transalkoxylation reaction.

Subscript b is 1, 2, or 3, such that the organosilicon compound (D) comprises monoalkoxysilyl group, dialkoxysilyl group, or trialkoxysilyl group, respectively. Typically, subscript b is 2 or 3, such that the organosilicon compound (D) comprises a dialkoxysilyl group or trialkoxysilyl group, respectively. In particular embodiments, subscript b is 2, such that the organosilicon compound (D) comprises a dialkoxysilyl group. In some embodiments, subscript b is 3, such that the organosilicon compound (D) comprises a trialkoxysilyl group. However, in certain embodiments, subscript b is 1, such that the organosilicon compound (D) comprises a monoalkoxysilyl group.

In certain embodiments, the method comprises utilizing more than one organosilicon compound (D), such as 2, 3, 4, or more organosilicon compounds (D). In such embodiments, each organosilicon compound (D) is independently selected, and may be the same as or different from any other organosilicon compound (D).

The organosilicon compound (D) may be utilized in any form, such as neat (i.e., absent solvents, carrier vehicles, diluents), or disposed in a carrier vehicle, such as a solvent or dispersant (e.g. such as any of those listed above). In some embodiments, the organosilicon compound (D) is utilized in a form absent water and/or carrier vehicles/volatiles reactive with the initial organosiloxane compound (A), the alcohol component (B), the catalyst (C), and/or the organosilicon compound (D) itself (i.e., until combined with components (A) and (B). For example, in certain embodiments, the method may comprise stripping the organosilicon compound (D) of volatiles and/or solvents (e.g. water, organic solvents). Techniques for stripping the organosilicon compound (D) are known in the art, and may include heating, drying, applying reduced pressure/vacuum, azeotroping with solvents, utilizing molecular sieves, and combinations thereof.

The organosilicon compound (D) may be utilized in any amount, which will be selected by one of skill in the art, e.g. dependent upon the particular organosilicon compound (D) being utilized, the particular initial organosiloxane compound (A) selected, the reaction parameters employed, the scale of the reaction (e.g. total amounts of the components (A), (B), and (D) to be reacted, the alkoxy-functional organosiloxane compound to be prepared).

The relative amounts of the initial organosiloxane compound (A) and the alcohol component (B) utilized may vary, e.g. based upon the particular initial organosiloxane compound (A) selected, the particular organic alcohol of component (B) selected, the reaction parameters employed, whether the organosilicon compound (D) is utilized. Typically, an excess (e.g. molar and/or stoichiometric) of one of the components is utilized to fully transform the initial organosiloxane compound (A) into the alkoxy-functional organosiloxane compound and/or fully consume the organic alcohol of the alcohol component (B) and/or the organosilicon compound (D), e.g. to simplify purification of the reaction product formed. For example, in certain embodiments, the alcohol component (B) is utilized in relative excess (e.g. where the organic alcohol is present in a stoichiometric excess of the number of silanol groups of the initial organosiloxane compound (A)) to maximize a conversion rate of the initial organosiloxane compound (A) to the alkoxy-functional organosiloxane compound. In some such embodiments, the alcohol component (B) may also be utilized, or otherwise function, as a carrier vehicle in the reaction. In certain embodiments, the organosilicon compound (D) is utilized in a stoichiometric excess of the number of silanol groups of the initial organosiloxane compound (A). In some such embodiments, the alcohol component (B) may be utilized in relative excess of the organosilicon compound (D). In other such embodiments, the organosilicon compound (D) may be utilized in relative excess of the alcohol component (B). It will be appreciated that the initial organosiloxane compound (A) may be used in excess of the organic alcohol of the alcohol component (B) (e.g. when maximum consumption of the organic alcohol is desired) and/or the organosilicon compound (D) (e.g. when maximum consumption of the organosilicon compound (D) is desired).

As understood by those of skill in the art, the alkoxylation of the initial organosiloxane compound (A) with the organic alcohol of the alcohol component (B) occurs at a theoretical maximum based on the number of silanol functionalities present within the initial organosiloxane compound (A). In particular, with reference to general formula (I) of the initial organosiloxane compound (A) above, each silanol group designated by Si-R² can be condensed with one organic alcohol of the alcohol component (B), such that one molar equivalent of the organic alcohol of the alcohol component (B) is needed for every silanol group of the initial organosiloxane compound (A) to achieve a complete (i.e., maximum) alkoxylation of the initial organosiloxane compound (A). In this fashion, when the initial organosiloxane compound (A) comprises a single silanol group, the reaction of the initial organosiloxane compound (A) with the organic alcohol of the alcohol component (B) occurs at a theoretical maximum molar ratio of 1:1 [A]:[B], where [A] is the molar amount of the initial organosiloxane compound (A) and [B] is the molar amount of the organic alcohol of the alcohol component (B). Likewise, when the initial organosiloxane compound (A) comprises two silanol groups, the reaction of the initial organosiloxane compound (A) with the organic alcohol of the alcohol component (B) occurs at a theoretical maximum molar ratio of 1:2 [A]:[B], where [A] and [B] are as defined above. Said differently, the theoretical maximum stoichiometric ratio of the reaction of the initial organosiloxane compound (A) with the organic alcohol of the alcohol component (B) is 1:1 [Si-OH]:[B], where [Si-OH] represents the number of silanol groups of the initial organosiloxane compound (A) and [B] is the number of the molecules of the organic alcohol of the alcohol component (B). As such, the initial organosiloxane compound (A) and the organic alcohol of the alcohol component (B) are typically reacted in a stoichiometric ratio of from 10:1 to 1:10, alternatively from 8:1 to 1:8, alternatively from 6:1 to 1:6, alternatively from 4:1 to 1:4, alternatively from 2:1 to 1:2, alternatively 1:1 [Si-OH]:[B], where [Si-OH] and [B] are as defined above.

As understood by those of skill in the art, the reactivity of the organosilicon compound (D) is controlled by the alkoxysilyl group and, in particular, by the number of alkoxy groups of formula R⁸O- as indicated by subscript b. As such, when subscript b is 1, 2, or 3, the organosilicon compound (D) may be reacted (e.g. condensed and/or alkoxylated) with 1, 2, or 3 total equivalents of silanol and/or alcohol groups (e.g. from the initial organosiloxane compound (A), the organic alcohol of the alcohol component (B), and/or reaction intermediates formed therefrom), respectively.

In certain embodiments, the organosilicon compound (D) is utilized in a molar ratio to the initial organosiloxane compound (A), a molar ratio to the alcohol component (B), a stoichiometric ratio to number of silanol groups of the initial organosiloxane compound (A), and/or a stoichiometric ratio to number of molecules of the organic alcohol of the alcohol component (B) utilized. For example, the organosilicon compound (D) may be utilized in a ratio of from 10:1 to 1:10, alternatively from 8:1 to 1:8, alternatively from 6:1 to 1:6, alternatively from 4:1 to 1:4, alternatively from 2:1 to 1:2, alternatively 1:1 [Si-OH]:[D], where [Si-OH] is as defined above and [D] represents the number of is the number of the molecules of the organosilicon compound (D). In some embodiments, the organosilicon compound (D) may be utilized in a ratio of from 10:1 to 1:10, alternatively from 8:1 to 1:8, alternatively from 6:1 to 1:6, alternatively from 4:1 to 1:4, alternatively from 2:1 to 1:2, alternatively 1:1 [Si-OH]:([D]/b), where [Si-OH] and [D] are as defined above and b is equivalent to subscript b (i.e., number of alkoxy groups of formula R⁸O-) of the organosilicon compound (D). In particular embodiments, the organosilicon compound (D) may be utilized in a ratio of from 10:1 to 1:10, alternatively from 8:1 to 1:8, alternatively from 6:1 to 1:6, alternatively from 4:1 to 1:4, alternatively from 2:1 to 1:2, alternatively 1:1 [B]:[D], where [B] and [D] are as defined above. In specific embodiments, the organosilicon compound (D) may be utilized in a ratio of from 10:1 to 1:10, alternatively from 8:1 to 1:8, alternatively from 6:1 to 1:6, alternatively from 4:1 to 1:4, alternatively from 2:1 to 1:2, alternatively 1:1 [B]:([D]/b), where [B], [D], and b are as defined above.

It will be appreciated that ratios outside of the specific ranges above may also be utilized. For example, in certain embodiments, the organic alcohol of the alcohol component (B) is utilized in a gross excess (e.g. in an amount of ≥5, alternatively ≥10, alternatively ≥15, alternatively ≥20, times the stoichiometric amount of silanol groups of the initial organosiloxane compound (A)), such as when the organic alcohol of the alcohol component (B) is utilized as a carrier (i.e., a solvent, diluent) during the reaction. Regardless, one of skill in the art will readily select the particular amounts and ratios of the various components to prepare the alkoxy-functional organosiloxane compound according to the embodiments described herein, including the theoretical maximum reactivity ratios described above, the presence of any carrier vehicle(s), the particular components utilized (e.g. the number of silanol groups of component (A), the number of alkoxy groups of component (D)).

Each of the initial organosiloxane compound (A), alcohol component (B), catalyst (C), and organosilicon compound (D) (when utilized) may be provided "as is", i.e., ready for the reaction to prepare the alkoxy-functional organosiloxane compound. Alternatively, any one or more, or all, of components (A), (B), (C), and (D) may be formed prior to or during the reaction. As such, in some embodiments, the method comprises preparing the initial organosiloxane compound (A), the alcohol component (B), the catalyst (C), and/or the organosilicon compound (D). In specific embodiments, the method comprises preparing the catalyst (C) by combining at least the amine compound and the carboxylic acid to give the ammonium carboxylate compound of the catalyst (C).

Typically, components (A) and (B), and optionally (D) are reacted in a vessel or reactor to prepare the alkoxy-functional organosiloxane compound. When the reaction is carried out at an elevated or reduced temperature as described below, the vessel or reactor may be heated or cooled in any suitable manner, e.g. via a jacket, mantle, exchanger, bath, coils.

Components (A), (B), and (C), and optionally (D), may be fed together or separately to the vessel, or may be disposed in the vessel in any order of addition, and in any combination. For example, in certain embodiments, components (B) and (C) are added to a vessel containing component (A), and optionally component (D). In such embodiments, components (B) and (C) may be first combined prior to the addition, or may be added to the vessel sequentially (e.g. (C) then (B)). In other embodiments, component (C) is added to a vessel containing components (A) and (B), and optionally (D), as a premade component or as individual components to form the catalyst (C) in situ. In general, reference to the "reaction mixture" herein refers generally to a mixture comprising components (A), (B), and (C), and optionally (D), (e.g. as obtained by combining such components, as described above).

The method may further comprise agitating the reaction mixture. The agitating may enhance mixing and contacting together components (A), (B), and (C), and optionally (D), when combined, e.g. in the reaction mixture thereof. Such contacting independently may use other conditions, with (e.g. concurrently or sequentially) or without (i.e., independent from, alternatively in place of) the agitating. The other conditions may be tailored to enhance the contacting, and thus reaction (i.e., alkoxylation), of the initial organosiloxane compound (A) with the alcohol component (B), the transalkoxylation of the organosilicon compound (D) with the initial organosiloxane compound (A) and/or the alcohol component (B), to form the alkoxy-functional organosiloxane compound. Other conditions may be result-effective conditions for enhancing reaction yield or minimizing amount of a particular reaction by-product included within the reaction product along with the alkoxy-functional organosiloxane compound.

In certain embodiments, the reaction of components (A) and (B), and optionally (D), is carried out in the presence of a carrier vehicle or solvent, such as one or more of those described above. For example, portions of carrier vehicle or solvent may be added to or otherwise combined with the initial organosiloxane compound (A), the alcohol component (B), the catalyst (C), and/or the organosilicon compound (D) (when utilized) discretely, collectively with mixtures of components (A), (B), (C), and/or (D), or with the reaction mixture as a whole. The total amount of carrier vehicle/solvent present in the reaction mixture will be selected by one of skill in the art, e.g. based on the particular component (A), (B), (C), and/or (D) selected, the reaction parameters employed).

In certain embodiments, the reaction of components (A) and (B), and optionally (D), is carried out in the absence of any carrier vehicle or solvent. For example, no carrier vehicle or solvent may be combined discretely with the initial organosiloxane compound (A), the alcohol component (B), the catalyst (C), and/or the organosilicon compound (D) (when utilized). In these or other embodiments, none of components (A), (B), (C), and (D) are disposed in any carrier vehicle or solvent, such that no carrier vehicle or solvent is present in the reaction mixture during the transesterification (i.e., the reaction mixture is free from, alternatively substantially free from, solvents).

The above notwithstanding, in certain embodiments, one of components (A), (B), (C), and/or (D) may be a carrier, e.g. when utilized as a fluid in an amount sufficient to carry, dissolve, or disperse any other component of the reaction mixture. In specific embodiments, the alcohol component (B) is utilized as a carrier. Additionally, it will be appreciated that the alkoxylation of the initial organosiloxane compound (A) with the alcohol component (B) results in the production of water (hereinafter the "water byproduct"). Likewise, reacting the organosilicon compound (D) with the initial organosiloxane compound (A) (e.g. via condensation) and/or the alcohol component (B) (e.g. via transalkoxylation) results in the production of the alcohol of formula R⁸-OH (hereinafter the "alcohol byproduct"), where R⁸ is as defined above with respect to the organosilicon compound (D). The water and/or alcohol byproducts may be utilized as a carrier (i.e., once produced).

In certain embodiments, the water and/or alcohol byproducts are removed from the reaction mixture once produced. As understood in the art, alkoxylations and transalkoxylations are reversible reactions, such that removing the water and/or alcohol byproducts from the reaction mixture influences the reaction in terms of selectivity in favor, and/or overall yields, of the alkoxy-functional organosiloxane compound (e.g. by selectively driving the equilibrium of the reaction toward that product). Removing the water and/or alcohol byproducts may include distillation, heating, applying reduced pressure/vacuum, azeotroping with solvents, utilizing molecular sieves, and combinations thereof. For example, when component (D) is utilized the alcohol byproduct is typically volatile, or at least more volatile than components (A), (B), and/or (C) in the reaction mixture. As such, the removal of the alcohol byproduct may include distillation, heating, applying reduced pressure/vacuum, azeotroping with solvents, utilizing molecular sieves, and combinations thereof, even during the reaction.

In certain embodiments, removing the water and/or alcohol byproducts comprises distilling the water and/or alcohol byproducts from the reaction mixture during the reaction, such that the reaction is carried out under distillation conditions. The distillation conditions typically include: (i) an elevated temperature; (ii) a reduced pressure; or (iii) both an elevated temperature and reduced pressure. By elevated or reduced, it is meant as compared to room temperature and atmospheric pressure. As understood in the art, the number of trays utilized in any distillation may be optimized, and may influence the rate and/ or recovery of the alcohol byproduct with respect to the distillate produced. The distillation may be continuous or batched, and may include use of a solvent (e.g. hexane, toluene) such that the distillation may be an azeotropic distillation. The distillate comprising the azeotropic solvent utilized may be reused and/or recycled after removing the water byproduct therefrom (e.g. via solvent phase extraction).

In some embodiments, the reaction is carried out at the elevated temperature. The elevated temperature will be selected and controlled depending on the particular initial organosiloxane compound (A) selected, the particular the alcohol component (B) selected, the organosilicon compound (D) selected (e.g. the particular alcohol byproduct being produced as a factor of substituent(s) R⁸O- of component (D)), the reaction vessel selected (e.g. whether open to ambient pressure, sealed, under reduced pressure). Accordingly, the elevated temperature will be readily selected by one of skill in the art in view of the reaction conditions and parameters selected and the description herein. The elevated temperature is typically from greater than ambient temperature to 150 °C, such as from 30 to 140, alternatively from 40 to 140, alternatively from 40 to 130, alternatively from 50 to 130, alternatively from 50 to 120, alternatively from 50 to 110, alternatively from 60 to 110, alternatively from 60 to 100 °C.

In certain embodiments, the reaction is carried out at reduced pressure. The reduced pressure will be selected and controlled depending on the particular alcohol component (B) selected (e.g. the organic alcohol thereof), the particular catalyst (C) selected (e.g. the ammonium carboxylate compound thereof), the organosilicon compound (D) selected (e.g. the particular alcohol byproduct to be produced therefrom). Accordingly, the reduced pressure will be readily selected by one of skill in the art in view of the reaction conditions and parameters selected and the description herein. The reduced pressure is typically operated as a vacuum although any reduced pressure between vacuum and atmospheric pressure (i.e., 101.325 kPa) may be utilized. For example, the reduced pressure may be from greater than 0 to 30, alternatively from greater than 0 to 20, alternatively from greater than 0 to 15, alternatively from greater than 0 to 10, alternatively from greater than 0 to 8, alternatively from greater than 0 to 6, alternatively from greater than 0 to 5, alternatively from greater than 0 to 4, alternatively from greater than 0 to 3, alternatively from greater than 0 to 2, kPa (e.g. as measured by mmHg).

It is to be appreciated that the elevated temperature and/or reduced pressure may also differ from the ranges set forth above, especially when both elevated temperature and reduced pressure are utilized. For example, in certain embodiments, the reduced pressure is utilized in order to maintain reaction progression while utilizing a lower reaction temperature, which may lead to a decrease in the formation of undesirable byproducts (e.g. polymerization, degradation, and/or decomposition byproducts). Likewise, it is also to be appreciated that reaction parameters may be modified during the reaction of components (A) and (B), and optionally (D). For example, temperature, pressure, and other parameters may be independently selected or modified during the reaction. Any of these parameters may independently be an ambient parameter (e.g. room temperature and/or atmospheric pressure) and/or a non-ambient parameter (e.g. reduced or elevated temperature and/or reduced or elevated pressure). Any parameter, may also be dynamically modified, modified in real time, i.e., during the method, or may be static (e.g. for the duration of the reaction, or for any portion thereof.)

The time during which the reaction of components (A) and (B), and optionally (D), to prepare the alkoxy-functional organosiloxane compound is carried out is a function of scale, reaction parameters and conditions, selection of particular components. On a relatively large scale (e.g. greater than 1, alternatively 5, alternatively 10, alternatively 50, alternatively 100 kg), the reaction may be carried out for hours, such as from 2 to 48, alternatively from 3 to 36, alternatively from 4 to 24, alternatively of 6, 12, 18, 24, 36, or 48 hours, as will be readily determined by one of skill in the art (e.g. by monitoring conversion of the initial organosiloxane compound (A), production of the alkoxy-functional organosiloxane compound, such as via chromatographic and/or spectroscopic methods). In certain embodiments, the time during which the reaction is carried out is from greater than 0 to 48 hours, alternatively from 1 to 36 hours, alternatively from 1 to 24 hours, alternatively from 1 to 12 hours, alternatively from 2 to 12 hours, alternatively from 2 to 8 hours, after components (A) and (B), and optionally (D), are combined in the presence of component (C).

Generally, the reaction of components (A) and (B) prepares a reaction product comprising the alkoxy-functional organosiloxane compound. In particular, over the course of the reaction, the reaction mixture comprising components (A), (B), and (C), and optionally (D), comprises increasing amounts of the alkoxy-functional organosiloxane compound and decreasing amounts of components (A) and (B), and (D) when utilized. Once the reaction is complete (e.g. one of components (A) and (B) is consumed, no additional alkoxy-functional organosiloxane compound is being prepared), the reaction mixture may be referred to as a reaction product comprising the alkoxy-functional organosiloxane compound. In this fashion, the reaction product typically includes any remaining amounts of components (A), (B), and (C), and optionally (D), as well as degradation and/or reaction products thereof (e.g. materials which were not previously removed via any distillation, stripping). If the reaction is carried out in any carrier vehicle or solvent, the reaction product may also include such carrier vehicle or solvent.

In certain embodiments, the method further comprises isolating and/or purifying the alkoxy-functional organosiloxane compound from the reaction product. As used herein, isolating the alkoxy-functional organosiloxane compound is typically defined as increasing the relative concentration of the alkoxy-functional organosiloxane compound as compared to other compounds in combination therewith (e.g. in the reaction product or a purified version thereof). As such, as is understood in the art, isolating/purifying may comprise removing the other compounds from such a combination (i.e., decreasing the amount of impurities combined with the alkoxy-functional organosiloxane compound, e.g. in the reaction product) and/or removing the alkoxy-functional organosiloxane compound itself from the combination. Any suitable technique and/or protocol for isolation may be utilized. Examples of suitable isolation techniques include distilling, stripping/evaporating, extracting, filtering, washing, partitioning, phase separating, chromatography, and the like. As will be understood by those of skill in the art, any of these techniques may be used in combination (i.e., sequentially) with any another technique to isolate the alkoxy-functional organosiloxane compound. It is to be appreciated that isolating may include, and thus may be referred to as, purifying the alkoxy-functional organosiloxane compound. However, purifying the alkoxy-functional organosiloxane compound may comprise alternative and/or additional techniques as compared to those utilized in isolating the alkoxy-functional organosiloxane compound. Regardless of the particular technique(s) selected, isolation and/or purification of alkoxy-functional organosiloxane compound may be performed in sequence (i.e., in line) with the reaction itself, and thus may be automated. In other instances, purification may be a stand-alone procedure to which the reaction product comprising the alkoxy-functional organosiloxane compound is subjected.

In particular embodiments, isolating the alkoxy-functional organosiloxane compound comprises distilling and/or stripping volatiles from the reaction product. For example, in certain embodiments, such as where component (B) is used in excess of component (A), remaining amounts of component (B) are distilled and/or stripped from the reaction mixture comprising the alkoxy-functional organosiloxane compound. In these or other embodiments, isolating the alkoxy-functional organosiloxane compound comprises filtering the reaction product to remove remaining amounts of the catalyst (C) and/or solids formed therefrom. In both or either case (e.g. after removing components (B) and/or (C) via stripping/distillation and/or filtration), the reaction product may be referred to as a purified reaction product comprising the alkoxy-functional organosiloxane compound.

In particular embodiments, the method further comprises purifying the alkoxy-functional organosiloxane compound. Any suitable technique for purification may be utilized. In certain embodiments, purifying the alkoxy-functional organosiloxane compound comprises distillation, to either remove the alkoxy-functional organosiloxane compound (e.g. as a distillate) or to strip other compounds/components therefrom (i.e., leaving the alkoxy-functional organosiloxane compound in the pot as a high-boiling component of the reaction mixture or purified reaction mixture. As will be appreciated by those of skill in the art, distilling the reaction product or purified reaction product to purify and/or isolate the alkoxy-functional organosiloxane compound is typically carried out at an elevated temperature and a reduced pressure. The elevated temperature and reduced pressure are independently selected, e.g. based on the particular components of the reaction, the particular alkoxy-functional organosiloxane compound prepared, other isolation/purification techniques utilized. For example, any of the elevated temperatures and reduced pressures described herein may be utilized in purifying the alkoxy-functional organosiloxane compound.

As will be appreciated by those of skill in the art in view of the description above, the particular alkoxy-functional organosiloxane compound prepared in accordance with the method is a function of the particular initial organosiloxane compound (A), the alcohol component (B), and the organosilicon compound (D) (when utilized) reacted in the presence of the catalyst (C). In general, the method prepares an alkoxy-functional organosiloxane compound having the general formula (II):

[(R³O)_{c}(R⁷)_{3-c}SiO_{1/2}]_{w}[(R³O)_{d}(R⁹)_{2-d}SiO_{2/2}]ₓ[R¹⁰SiO_{3/2}]_{y}[(R³O)(R¹)₂SiO_{1/2}]_{z} (II),

where each R¹, R³, and R⁷ is an independently selected hydrocarbyl group; each R⁹ is R¹ or R⁷ in each unit indicated by subscript x; R¹⁰ is independently R¹ or R⁷ in each unit indicated by subscript y; subscript c is independently 1 or 2 in each unit indicated by subscript w; subscript d is independently 1 or 2 in each unit indicated by subscript x; and subscripts w, x, y, and z are each ≥ 0 and ≤ 1, with the provisos that w+x+z>0, and w+x+y+z=1.

With reference to general formula (II), subscripts w, x, y, and z are each mole fractions such that w+x+y+z=1. Moreover, subscripts w, x, y, and z each indicate the presence, or optional presence, of particular siloxy moieties in the alkoxy-functional organosiloxane compound. In particular, as will be understood by one of skill in the art in view of the description herein, the particular initial organosiloxane compound (A) utilized in the method forms portions of the siloxy moieties of the alkoxy-functional organosiloxane compound that are indicated by subscript x where each R⁹ is R¹, those indicated by subscript y where R¹⁰ is R¹, and those indicated by subscript z. Likewise, the particular organosilicon compound (D) utilized in the method forms portions of the siloxy moieties that are indicated by subscript w, those indicated by subscript x where each R⁹ is R⁷, and those indicated by subscript y where R¹⁰ is R⁷, and those indicated by subscript z. It will also be understood that the particular organic alcohol of the alcohol component (B) utilized in the method forms the alkoxy groups of formula R³O- in the various siloxy moieties of the alkoxy-functional organosiloxane compound. As such, where formulas, structures, moieties, groups, or other such motifs are shared between the alkoxy-functional organosiloxane compound of formula (II) and components (A), (B), and/or (D), the description above with respect to such shared motifs may equally describe the alkoxy-functional organosiloxane compound prepared.

For example, as described above with regard to components (A), (B), and (C), each R¹ is typically an independently selected substituted or unsubstituted hydrocarbyl group, such as a substituted or unsubstituted hydrocarbyl group having from 1 to 18 carbon atoms (e.g. methyl, phenyl). Each R³ is typically an independently selected substituted or unsubstituted hydrocarbyl group having from 3 to 30 carbon atoms (e.g. where the alkoxy groups of formula R³O- correspond to organic alcohols of formula R³OH when hydrolyzed). Each R⁷ is typically an independently selected substituted or unsubstituted hydrocarbyl group having from 1 to 6 carbon atoms (e.g. methyl, phenyl).

In certain embodiments, where components (A) and (B) are reacted in the presence of the catalyst (C) and not component (D) (i.e., when no component (D) is utilized), the alkoxy-functional organosiloxane compound has the general formula (III):

[(R³O)_{d}(R¹)_{2-d}SiO_{2/2}]ₓ[R¹SiO_{3/2}]_{y}[(R³O)(R¹)₂SiO_{1/2}]_{z} (III),

where each R¹, R³, and subscripts d, x, y, and z are as defined above. For example, in some embodiments, the alkoxy-functional organosiloxane compound has the general formula (IV): 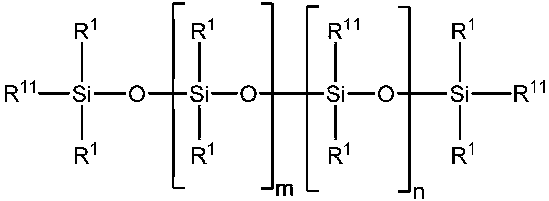 where each R¹¹ is independently R¹ or -OR³, with the proviso that at least one R¹¹ is -OR³, each R¹ and R³ is as defined above; subscript m is from 1 to 8000; and subscript n is from 0 to 20. In specific embodiments, subscript n is 0 and each R¹¹ is -OR³, such that the alkoxy-functional organosiloxane compound has the formula: 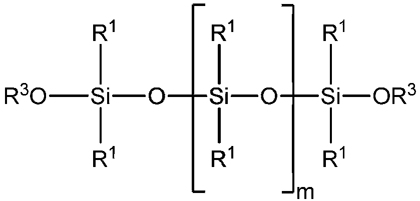 where each R¹, R³, and subscript m is as defined above.

In certain embodiments, where components (A) and (B) are reacted in the presence of the catalyst (C) and component (D) (i.e., when component (D) is utilized), the alkoxy-functional organosiloxane compound prepared by the method of the invention has the general formula: 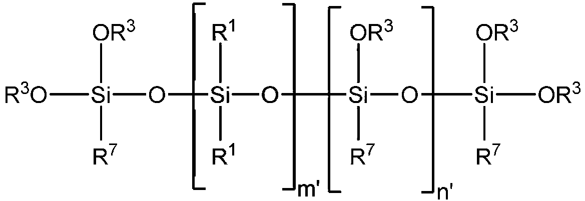 where each R¹, R³, and R⁷ is as defined above, subscript m' is from 1 to 8000, alternatively 6 to 8000; and subscript n' is from 0 to 20.

A composition comprising the alkoxy-functional organosiloxane compound can be provided, but falls outside of the scope of the current invention. The composition generally comprises the alkoxy-functional organosiloxane compound and at least one other component, such as a non-reactive component (e.g. a carrier vehicle, solvent), a reactive component (e.g. a compound reactive with, or capable of being made reactive with, the alkoxy-functional organosiloxane compound), or combinations thereof. In certain embodiments, the composition comprises less than 0.1 % cyclic polydiorganosiloxanes based on the total amount of components therein (e.g. wt.%, based on the total weight of the composition).

In general, the composition comprising the alkoxy-functional organosiloxane compound may comprise, or be, the reaction product prepared according to the embodiments described above. In some embodiments however, the method includes purifying and/or isolating the alkoxy-functional organosiloxane compound from the reaction product, and the composition thus comprises the isolated and/or purified alkoxy-functional organosiloxane compound.

In particular embodiments, the method comprises preparing the reaction product comprising the alkoxy-functional organosiloxane compound, and removing the catalyst (C) from the reaction product to give a purified alkoxy-functional organosiloxane compound. In such embodiments, the purified alkoxy-functional organosiloxane compound comprises a cyclic polydiorganosiloxane content of less than 1, alternatively less than 0.8, alternatively less than 0.6, alternatively less than 0.4, alternatively less than 0.2, alternatively less than 0.1 %, based on the total amount of components therein (e.g. wt.%, based on the total weight of the composition). In some such embodiments, the method further comprises preparing a composition comprising the alkoxy-functional organosiloxane compound via combining the purified alkoxy-functional organosiloxane compound and at least one other component. In these embodiments, the composition comprises less than 0.1, alternatively less than 0.05%, alternatively less than 0.01% cyclic polydiorganosiloxanes based on the total amount of components therein (e.g. wt.%, based on the total weight of the composition).

The following examples, illustrating embodiments of this disclosure, are intended to illustrate and not to limit the invention. The brief summary immediately below provides information as to certain abbreviations, shorthand notations, and components utilized in the Examples. Each group not expressly shown and pending from a silicon atom is a methyl group (-CH₃) unless otherwise indicated.

The various components utilized in the Examples are set forth in Table 1 below.

**Table 1: Compounds Utilized in Examples 1-8**

| Component | Description |
|---|---|
| Initial Organosiloxane Compound (A1) | Silanol end-blocked polydimethylsiloxane fluid (viscosity = ~70 mPa-s (25 °C); OH/Silanol content = ~1.15%) |
| Initial Organosiloxane Compound (A2) | Silanol end-blocked polydimethylsiloxane fluid (viscosity = ~30 mPa-s (25 °C); OH/Silanol content = ~3.8%) |
| Alcohol Component (B1) | Geraniol, 97% |
| Alcohol Component (B2) | 2-(ethylamino)ethanol |
| Alcohol Component (B3) | Benzyl alcohol |
| Alcohol Component (B4) | 2-octanol |
| Alcohol Component (B5) | 2-methyl-2-butanol |
| Amine Compound (C-A1) | Diethylamine |
| Amine Compound (C-A2) | 3-aminopropylmethyldiethoxysilane |
| Amine Compound (C-A3) | 2-(ethylamino)ethanol |
| Carboxylic Acid (C-B1) | Propionic acid |
| Carboxylic Acid (C-B2) | Acetic acid, glacial |
| Organosilicon Compound (D1) | Trimethoxymethylsilane |
| Organosilicon Compound (D2) | 3-aminopropylmethyldiethoxysilane |

In each of the Examples below, viscosity is determined by loading a sample into a cup, letting the cup stand for one minute to reach room temperature, and then measuring the viscosity of the sample on a Brookfield DV-III viscometer at 25 °C, with rpm adjusted to reach a stress of from 45-55%.

### Example 1

A 3-neck flask is equipped with a reflux condenser, nitrogen sweep, stirrer, and a heating mantle connected to temperature controller and thermocouple. The flask is charged with Initial Organosiloxane Compound (A1) (84.13 wt.%), Alcohol Component (B1) (12.91 wt.%), Amine Compound (C-A1) (1.63 wt.%), and Carboxylic Acid (C-B1) (1.34 wt.%) to form a reaction mixture, which is then heated to and held at 90 °C for 2 h under nitrogen sweep with stirring. A vacuum is then pulled on the flask (pressure < 50 mmHg) while maintaining the temperature at 90 °C to distill the reaction mixture for 3-4 h. The reaction mixture is then allowed to cool to room temperature to give a reaction product comprising an alkoxy-functional organosiloxane compound (transparent amber-brown polymer with a viscosity of ~70-100 cP).

A sample of the reaction product is analyzed via ¹H and ²⁹Si NMR to show silicon-bonded alkoxy-groups. The sample is then spiked with a portion of Initial Organosiloxane Compound (A1) to provide peaks corresponding to free silanol groups, with separation between the Si-O-C and Si-OH peaks indicating a complete alkoxylation of the initial organosiloxane compound (A) with the alcohol component (B), i.e., conversion.

### Example 2

A 3-neck flask is equipped with a reflux condenser, nitrogen sweep, stirrer, and a heating mantle connected to temperature controller and thermocouple. The flask is charged with Initial Organosiloxane Compound (A1) (84.13 wt.%), Alcohol Component (B1) (12.91 wt.%), Amine Compound (C-A1) (1.63 wt.%), and Carboxylic Acid (C-B2) (1.34 wt.%) to form a reaction mixture, which is then heated to and held at 90 °C for 2 h under nitrogen sweep with stirring. A vacuum is then pulled on the flask (pressure < 50 mmHg) while maintaining the temperature at 90 °C to distill the reaction mixture for 3-4 h. The reaction mixture is then allowed to cool to room temperature to give an amber-brown reaction product comprising an alkoxy-functional organosiloxane compound (transparent amber-brown polymer with a viscosity of ~70-100 cP), which is then analyzed via ¹H and ²⁹Si NMR.

### Example 3

A 3-neck flask (250 mL) is equipped with a reflux condenser, nitrogen sweep, stirrer, and a heating mantle connected to temperature controller and thermocouple. The flask is charged with Initial Organosiloxane Compound (A2) (89.46 g; 85.39 wt.%), Alcohol Component (B1) (6.78 g; 6.47 wt.%), and Organosilicon Compound (D1) (3.53 g; 3.37 wt.%) and heated to 100-120 °C with stirring. Amine Compound (C-A1) (2.62 g; 2.39 wt.%) and Carboxylic Acid (C-B1) (2.61 g; 2.39 wt.%) are combined in a separate container to form a catalyst mixture, which is then added to the flask with components (A), (B), and (D) to form a reaction mixture. The reaction mixture is then heated to and held at 100-120 °C for 2 h under nitrogen sweep. A vacuum is then pulled on the flask (pressure < 50 mmHg) while maintaining the temperature at 120 °C to distill the reaction mixture for 4 h to give a reaction product comprising an alkoxy-functional organosiloxane compound. The viscosity of the reaction mixture increases during distillation, indicating successful condensation/alkoxylation.

### Example 4

A 3-neck flask (250 mL) is equipped with a reflux condenser, nitrogen sweep, stirrer, and a heating mantle connected to temperature controller and thermocouple. The flask is charged with Initial Organosiloxane Compound (A2) (89.46 g; 85.20 wt.%), Alcohol Component (B1) (6.78 g; 6.46 wt.%), Amine Compound (C-A1) (2.62 g; 2.5 wt.%), Carboxylic Acid (C-B1) (2.5 g; 2.38 wt.%), Carboxylic Acid (C-B2) (0.11 g; 0.10 wt.%) and Organosilicon Compound (D1) (3.53 g; 3.36 wt.%) to form a reaction mixture, which is then heated to and held at 90 °C for 2 h under nitrogen sweep with stirring. A vacuum is then pulled on the flask (pressure < 50 mmHg) while the temperature is increased to and maintained at 120 °C to distill the reaction mixture for 2 h. The reaction mixture is then allowed to cool to room temperature to give a reaction product comprising an alkoxy-functional organosiloxane (amber-brown polymer with a viscosity of >10,000 cP), which is then analyzed via ¹H and ²⁹Si NMR.

### Example 5

A 3-neck flask (250 mL) is equipped with a reflux condenser, nitrogen sweep, stirrer, and a heating mantle connected to temperature controller and thermocouple. The flask is charged with Initial Organosiloxane Compound (A2) (83.61 wt.%), Alcohol Component (B1) (10.27 wt.%), Amine Compound (C-A1) (1.68 wt.%), Carboxylic Acid (C-B2) (1.38 wt.%), and Organosilicon Compound (D1) (3.06 wt.%) to form a reaction mixture, which is then heated to and held at 120 °C for 2 h under nitrogen sweep with stirring. A vacuum is then pulled on the flask (pressure < 50 mmHg) while maintaining the temperature at 120 °C to distill the reaction mixture for 3-4 h. The reaction mixture is then allowed to cool to room temperature to give a reaction product comprising an alkoxy-functional organosiloxane (amber-brown polymer with a viscosity of 350-1400 cP), which is then analyzed via ¹H and ²⁹Si NMR.

### Example 6

A 3-neck flask (250 mL) is equipped with a reflux condenser, nitrogen sweep, stirrer, and a heating mantle connected to temperature controller and thermocouple. The flask is charged with Initial Organosiloxane Compound (A1) (42.07 g; 81.86 wt.%), Alcohol Component (B1) (5.33 g; 10.37 wt.%), Amine Compound (C-A2)/Organosilicon Compound (D2) (0.53 g; 1.03 wt.%), and Organosilicon Compound (D1) (1.86 g; 3.62 wt.%) and heated to 90 °C under nitrogen sweep with stirring. A first portion of Carboxylic Acid (C-B1) (0.76 g; 1.48 wt.%) is then added to the flask to give a reaction mixture, which is then held at 90 °C for 2 h under nitrogen sweep. A vacuum is then pulled on the flask (pressure < 50 mmHg) while maintaining the temperature at 90 °C to distill the reaction mixture for 1 h. A second portion of Carboxylic Acid (C-B1) (0.84 g; 1.63 wt.%) is then added to the reaction mixture, which is then heated to and held at 120 °C for 1h. The reaction mixture is then allowed to cool to room temperature to give a reaction product comprising an alkoxy-functional organosiloxane (transparent amber-brown polymer with a viscosity of ~1000-1500 cP), which is then analyzed via ¹H and ²⁹Si NMR.

### Example 7

A 3-neck flask (250 mL) is equipped with a reflux condenser, nitrogen sweep, stirrer, and a heating mantle connected to temperature controller and thermocouple. The flask is charged with Initial Organosiloxane Compound (A1) (83.61 wt.%) and Alcohol Component (B2)/Amine Compound (C-A3) (2.53 wt.%) and heated to 90 °C under nitrogen sweep with stirring. Carboxylic Acid (C-B1) (2.10 wt.%) is then added to the flask to form a reaction mixture, which is held at 90 °C for 2 h under nitrogen sweep. A vacuum is then pulled on the flask (pressure < 50 mmHg) while maintaining the temperature at 90 °C to distill the reaction mixture for 2-3 h. The temperature is then increased to and held at 120 °C for 2 h. The reaction mixture is then allowed to cool to room temperature to give a hazy-appearing reaction product comprising an alkoxy-functional organosiloxane. The reaction product is then filtered to remove salts to give a purified alkoxy-functional organosiloxane (transparent, colorless polymer with a viscosity of ~4500-10000 cP), which is then analyzed via ¹H and ²⁹Si NMR.

### Examples 8-11: Preparation of Alkoxy-functional Organosiloxane Compounds with an Ammonium Carboxylate Catalyst

For each of Examples 8-11, a 20 mL vial is charged with Initial Organosiloxane Compound (A1) (8.41 g), an Alcohol Component (B) (0.8-1 g), Amine Compound (C-A1) (0.16 g), and Carboxylic Acid (C-B2) (0.13 g) to form a reaction mixture. The reaction mixture is then heated to and held at a temperature (T) for 4-6 h under a constant nitrogen sweep to give a reaction product comprising an alkoxy-functional organosiloxane compound. The parameters and results of Examples 8-11 are set forth in Table 2 below.

**Table 2: Examples 8-11**

| Example: | 8 | 9 | 10 | 11 |
|---|---|---|---|---|
| Alcohol Component (B): | B1 | B3 | B4 | B5 |
| Equivalents (B): | 3 | 2 | 6 | 3.4 |
| Temperature (T) | 120 | 90 | 90 | 90 |
| Conv. (%) (¹H NMR): | 100 | 95 | 100 | 100 |

## Claims

1. A method of preparing an alkoxy-functional organosiloxane compound, said method comprising:
reacting (A) an initial organosiloxane compound having at least one silanol group and (B) an alcohol component comprising an organic alcohol in the presence of (C) a catalyst comprising an ammonium carboxylate compound, thereby preparing the alkoxy-functional organosiloxane compound.

2. The method of claim 1, wherein the (A) initial organosiloxane compound has the general formula: 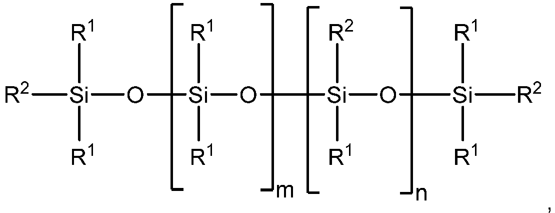 where each R¹ is an independently selected substituted or unsubstituted hydrocarbyl group; each R² is independently R¹ or -OH, with the proviso that at least one R² is -OH; subscript m is from 1 to 8000; and subscript n is from 0 to 20.

3. The method of claim 1 or 2, wherein the organic alcohol of the alcohol component (B) has the formula R³OH, where R³ is an independently selected substituted or unsubstituted hydrocarbyl group.

4. The method of any one of claims 1-3, wherein the ammonium carboxylate compound of the catalyst (C) comprises the reaction product of an amine compound and a carboxylic acid.

5. The method of claim 4, wherein:
i) the amine compound comprises a moiety having the general formula: 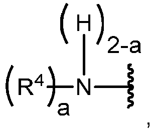 where each R⁴ is an independently selected substituted or unsubstituted hydrocarbyl group having from 1 to 18 carbon atoms, and subscript a is 0, 1, or 2.

6. The method of claim 4 or 5, wherein:
i) the carboxylic acid has the general formula: 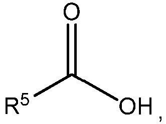 where R⁵ is an independently selected substituted or unsubstituted hydrocarbyl group having from 1 to 18 carbon atoms.

7. The method of any one of claims 4-6, wherein the ammonium carboxylate compound comprises: (i) acetate; (ii) propionate; or (iii) both (i) and (ii).

8. The method of any one of claims 1-7, wherein the method further comprises reacting the initial organosiloxane compound (A) and the alcohol component (B) in the presence of (D) an organosilicon compound having at least one alkoxysilyl group.

9. The method of claim 8, wherein the organosilicon compound (D) has the general formula: 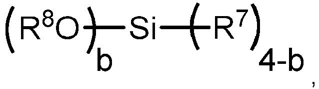 where each R⁷ is an independently selected substituted or unsubstituted hydrocarbyl group having from 1 to 6 carbon atoms; each R⁸ is an independently selected hydrocarbyl group having from 1 to 18 carbon atoms; and subscript b is 1, 2, or 3.

## Patentansprüche

1. Verfahren zum Vorbereiten einer alkoxyfunktionellen Organosiloxanverbindung, das Verfahren umfassend:
Umsetzen (A) einer anfänglichen Organosiloxanverbindung, die mindestens eine Silanolgruppe aufweist, und (B) einer Alkoholkomponente, umfassend einen organischen Alkohol, in der Gegenwart von (C) einem Katalysator, umfassend eine Ammoniumcarboxylatverbindung, wodurch die alkoxyfunktionelle Organosiloxanverbindung hergestellt wird.

2. Verfahren nach Anspruch 1, wobei die (A) anfängliche Organosiloxanverbindung die allgemeine Formel aufweist: 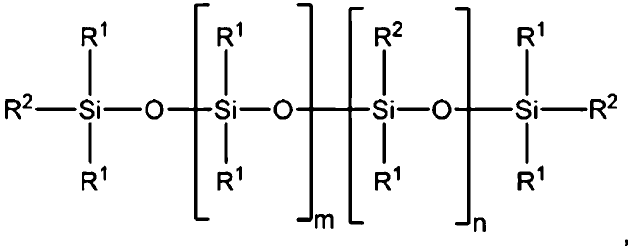 wobei jedes R¹ eine unabhängig ausgewählte substituierte oder unsubstituierte Kohlenwasserstoffrestgruppe ist; jedes R² unabhängig R¹ oder - OH ist, mit der Maßgabe, dass mindestens ein R² -OH ist; der untere Index m von 1 bis 8000 ist; und der untere Index n von 0 bis 20 ist.

3. Verfahren nach Anspruch 1 oder 2, wobei der organische Alkohol der Alkoholkomponente (B) die Formel R³OH aufweist, wobei R³ eine unabhängig ausgewählte substituierte oder unsubstituierte Kohlenwasserstoffrestgruppe ist.

4. Verfahren nach einem der Ansprüche 1 bis 3, wobei die Ammoniumcarboxylatverbindung des Katalysators (C) das Umsetzungsprodukt einer Aminverbindung und einer Carbonsäure umfasst.

5. Verfahren nach Anspruch 4, wobei:
i) die Aminverbindung einen Rest umfasst, der die allgemeine Formel aufweist: 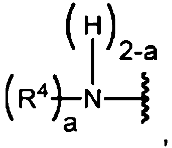 wobei jedes R⁴ eine unabhängig ausgewählte substituierte oder unsubstituierte Kohlenwasserstoffrestgruppe ist, die von 1 bis 18 Kohlenstoffatome aufweist und der untere Index 0, 1 oder 2 ist.

6. Verfahren nach Anspruch 4 oder 5, wobei:
i) die Carbonsäure die allgemeine Formel aufweist: 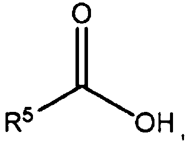 wobei R⁵ eine unabhängig ausgewählte substituierte oder unsubstituierte Kohlenwasserstoffrestgruppe ist, die von 1 bis 18 Kohlenstoffatome aufweist.

7. Verfahren nach einem der Ansprüche 4 bis 6, wobei die Ammoniumcarboxylatverbindung umfasst: (i) Acetat; (ii) Propionat; oder (iii) sowohl (i) als auch (ii).

8. Verfahren nach einem der Ansprüche 1 bis 7, wobei das Verfahren ferner das Umsetzen der anfänglichen Organosiloxanverbindung (A) und der Alkoholkomponente (B) in der Gegenwart von (D) einer Organosiliziumverbindung umfasst, die mindestens eine Alkoxysilylgruppe aufweist.

9. Verfahren nach Anspruch 8, wobei die Organosiliziumverbindung (D) die allgemeine Formel aufweist: 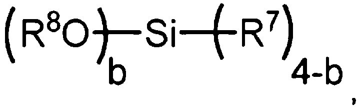 wobei jedes R⁷ eine unabhängig ausgewählte substituierte oder unsubstituierte Kohlenwasserstoffrestgruppe ist, die von 1 bis 6 Kohlenstoffatome aufweist; jedes R⁸ eine unabhängig ausgewählte Kohlenwasserstoffrestgruppe ist, die von 1 bis 18 Kohlenstoffatome aufweist; und der untere Index b 1 ,2 oder 3 ist.

## Revendications

1. Procédé pour la préparation d'un composé organosiloxane à fonctionnalité alcoxy, ledit procédé comprenant :
la mise en réaction (A) d'un composé organosiloxane initial ayant au moins un groupe silanol et (B) d'un composant alcool comprenant un alcool organique en présence de (C) un catalyseur comprenant un composé carboxylate ammonium, permettant ainsi de préparer le composé organosiloxane à fonctionnalité alcoxy.

2. Procédé selon la revendication 1, dans lequel le (A) composé organosiloxane initial a la formule : 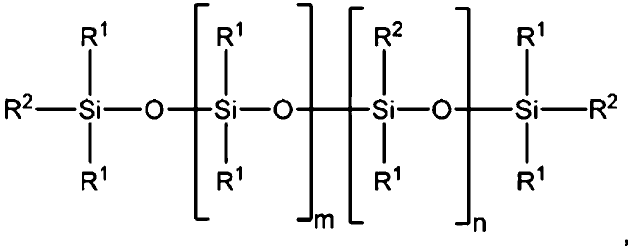 où chaque R¹ représente un groupe hydrocarbyle substitué ou non substitué choisi indépendamment ; chaque R² représente indépendamment R¹ ou -OH, à condition qu'au moins un R² représente -OH ; l'indice m va de 1 à 8000 ; et l'indice n va de 0 à 20.

3. Procédé selon la revendication 1 ou 2, dans lequel l'alcool organique du composant alcool (B) a la formule R³OH, où R³ représente un groupe hydrocarbyle substitué ou non substitué choisi indépendamment.

4. Procédé selon l'une quelconque des revendications 1 à 3, dans lequel le composé carboxylate d'ammonium du catalyseur (C) comprend le produit de réaction d'un composé amine et d'un acide carboxylique.

5. Procédé selon la revendication 4, dans lequel :
i) le composé amine comprend un groupement ayant la formule générale : 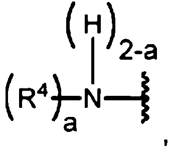 où chaque R⁴ représente un groupe hydrocarbyle substitué ou non substitué choisi indépendamment ayant 1 à 18 atomes de carbone, et l'indice a vaut 0, 1 ou 2.

6. Procédé selon la revendication 4 ou 5, dans lequel :
i) l'acide carboxylique a la formule générale : 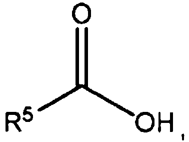 où R⁵ représente un groupe hydrocarbyle substitué ou non substitué choisi indépendamment ayant 1 à 18 atomes de carbone.

7. Procédé selon l'une quelconque des revendications 4 à 6, dans lequel le composé carboxylate d'ammonium comprend : i) de l'acétate ; (ii) du propionate ; ou (iii) à la fois (i) et (ii).

8. Procédé selon l'une quelconque des revendications 1 à 7, dans lequel le procédé comprend en outre la mise en réaction du composé organosiloxane initial (A) et du composant alcool (B) en présence de (D) un composé organosilicié ayant au moins un groupe alcoxysilyle.

9. Procédé selon la revendication 8, dans lequel le composé organosilicié (D) a la formule générale : 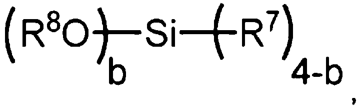 où chaque R⁷ représente un groupe hydrocarbyle substitué ou non substitué choisi indépendamment ayant 1 à 6 atomes de carbone ; chaque R⁸ représente un groupe hydrocarbyle choisi indépendamment ayant 1 à 18 atomes de carbone ; et l'indice b vaut 1, 2, ou 3.
